Europäisches Patentamt

European Patent Office

Office européen des brevets

(19)

(11) Numéro de publication : **0 319 389 B1**

(12) **FASCICULE DE BREVET EUROPEEN**

(45) Date de publication du fascicule du brevet :
14.08.91 Bulletin 91/33

(51) Int. Cl.$^5$ : **E04B 9/18, F16B 2/24**

(21) Numéro de dépôt : 88402990.1

(22) Date de dépôt : 29.11.88

(54) **Attache porteuse pour ossature de plafond.**

(30) Priorité : 30.11.87 FR 8716557

(43) Date de publication de la demande :
07.06.89 Bulletin 89/23

(45) Mention de la délivrance du brevet :
14.08.91 Bulletin 91/33

(84) Etats contractants désignés :
AT CH DE ES GB LI SE

(56) Documents cités :
FR-A- 1 552 088
FR-A- 2 058 674
FR-A- 2 315 584
FR-A- 2 408 752
US-A- 2 511 801

(73) Titulaire : PLACOPLATRE
20, rue Victorien-Sardou
F-92506 Rueil Malmaison Cedex (FR)

(72) Inventeur : Klein, Jean-Pierre
48bis Rue Pierre Louvrier
F-92140 Clamart (FR)
Inventeur : Gabel, Claude
41 Rue Jean Jaurès
F-77140 Claye-Souilly (FR)
Inventeur : Funten, Marc
59 Rue Alexandre Ribot
F-77290 Metry le Neuf (FR)
Inventeur : Rivaud, André
29 Rue Alexandre Manceau
F-77360 Vaires sur Marne (FR)

(74) Mandataire : CABINET BONNET-THIRION
95 Boulevard Beaumarchais
F-75003 Paris (FR)

## Description

La présente invention concerne d'une manière générale la suspension à une première ossature, ou ossature primaire, d'une deuxième ossature, ou ossature secondaire, propre à l'établissement d'un plafond, qu'il s'agisse d'un véritable plafond, rapporté de manière rigide sur l'ossature qui le porte, ou qu'il s'agisse d'un faux plafond, dont les panneaux, simplement posés sur une telle ossature, peuvent être soulevés en donnant ainsi accès au volume qui les surmonte.

Elle vise plus particulièrement le cas où l'ossature primaire à équiper est constituée de quelconques profilés, qui, tels que par exemple les profilés marchands, les IPN, ou les profilés reconstitués soudés, à profil en H, en L ou en I, présentent une aile propre à permettre d'y accrocher une quelconque suspente.

Pour un tel accrochage, il a déjà été proposé des attaches porteuses comportant, précisément, pour leur engagement sur une quelconque aile de profilé, une pièce à deux bras globalement parallèles, dite ci-après par simple commodité chape plutôt que pince, qui en est la partie dotée de moyens propres à permettre d'y atteler une suspente, et à l'un au moins des bras de laquelle sont associés, pour sa retenue sur une telle aile de profilé, des moyens élastiquement déformables d'ancrage propres à s'opposer à sont retrait vis-à-vis d'une telle aile de profilé lorsqu'elle a été engagée sur celle-ci.

En pratique, dans les attaches porteuses de ce type connues à ce jour, l'un au moins des bras de la chape, celui intervenant par dessus, et, le plus souvent, de manière symétrique, l'un et l'autre de ces bras, constituent par eux-même les moyens élastiquement déformables d'ancrage qui leur sont associés, ces bras présentant à cet effet des pointes par l'intermédiaire desquelles se fait leur contact avec l'aile de profilé qu'ils agrippent.

Bien que, au moins pour certaines applications, une telle disposition donne satisfaction, elle présente divers inconvénients, qui sont les suivants.

Tout d'abord, que seul le bras supérieur de la chape présente des pointes pour son contact avec une aile de profilé ou qu'il en soit également de même pour le bras inférieur de cette chape, l'appui de cette chape sur une telle aile de profilé se fait par l'intermédiaire de telles pointes, et, celles-ci étant élastiquement déformables, il y a le risque que, sous charge, les pointes en cause cédant élastiquement, la chape concernée ne vienne ainsi en quelque sorte intempestivement s'ouvrir.

Il en résulte, au mieux, une certaine incertitude sur la géométrie de la chape par rapport à l'aile de profilé, et, donc, sur l'implantation, par rapport à celle-ci, de la suspente qui lui est ainsi accrochée.

Il en résulte, également, et surtout, qu'il est nécessaire, avec de telles attaches porteuses, de respecter à l'emploi des limites de charges très contraignantes, impliquant qu'au-delà d'une certaine charge il faut passer d'un modèle à un autre.

Le nombre de modèles d'attaches porteuses nécessaire s'en trouve multiplié d'autant.

Cette sujétion se trouve aggravée par le fait que, par ailleurs, il est quasi impossible, avec des attaches porteuses dont les bras de la chape présentent des pointes pour leur contact avec une aile de profilé, de se satisfaire d'un seul modèle pour toute la gamme d'épaisseurs présentes sur le marché pour une telle aile de profilé, ce qui multiplie encore, au détriment de leur coût, le nombre de modèles d'attaches porteuses différentes dont il est nécessaire de disposer.

En outre, les pointes des attaches porteuses de ce type venant usuellement d'un seul tenant de leurs bras, c'est à l'ensemble d'une telle attache porteuse qu'il est nécessaire d'appliquer, après sa mise en forme, le traitement thermique propre à conférer à ces pointes les caractéristiques nécessaires, ce qui ne manque pas, encore, d'en renchérir le coût.

La présente invention a d'une manière générale pour objet une disposition permettant d'éviter ces inconvénients et conduisant en outre à d'autres avantages.

De manière plus précise, elle a pour objet une attache porteuse pour ossature de plafond du genre comportant, pour son engagement sur une quelconque aile de profilé, une chape dotée de moyens propres à permettre d'y atteler une quelconque suspente, avec, associés à l'un au moins des bras de ladite chape, des moyens élastiquement déformables d'ancrage propres à s'opposer au retrait de cette chape vis-à-vis d'une telle aile de profilé, cette attache porteuse étant caractérisée en ce que, pour leur contact avec l'aile de profilé concernée, les deux bras de la chape disposent chacun respectivement d'une zone rigide d'appui, la zone rigide d'appui dont dispose celui de ces bras auquel sont associés des moyens élastiquement déformables d'ancrage est distincte de la zone d'action par laquelle lesdits moyens élastiquement déformables d'ancrage sont eux-mêmes adaptés à porter sur une telle aile de profilé, et, prise dans son ensemble, la chape est entièrement rigide.

Ainsi, suivant l'invention, il y a une dissociation entre la zone d'appui par laquelle la chape porte sur l'aile de profilé sur laquelle elle est engagée, d'une part, et la zone d'action par laquelle les moyens élastiquement déformables d'ancrage qui lui sont associés interviennent eux-mêmes sur cette aile de profilé, d'autre part.

Il n'y a de ce fait aucun risque d'ouverture de cette chape sous charge, et l'attache porteuse suivant l'invention peut ainsi avantageusement convenir aussi bien au cas où la charge à supporter est modérée qu'au cas où elle est plus importante.

En outre, l'appui de la chape sur l'aile de profilé se faisant de manière posivite, par une zone d'appui rigide et non plus par des pointes élastiquement déformables, il n'y a aucune modification, sous charge, de la géométrie de cette chape, et donc de l'implantation, par rapport à l'aile de profilé, de la suspente qui y est attelée.

Enfin, il résulte également, de la dissociation entre la zone d'appui de la chape et la zone d'action des moyens élastiquement déformables d'ancrage qui lui sont associés, que ces moyens élastiquement déformables d'ancrage peuvent avantageusement appartenir à une pièce distincte de cette chape et simplement convenablement rapportée sur celle-ci.

Seule, dès lors, cette pièce nécessite un traitement thermique après sa mise en forme, la chape pouvant, elle, être soustraite à un tel traitement, au bénéfice d'une minimisation du coût de l'ensemble.

De préférence, suivant un développement de l'invention, d'un des bras de la chape à l'autre, les zones d'appui rigides correspondantes sont longitudinalement décalées l'une par rapport à l'autre, celui de ces bras dont la zone d'appui rigide est la plus éloignée de la traverse qui les relie l'un à l'autre étant en pratique celui intervenant du côté extérieur de l'aile de profilé concernée.

Il en résulte que, en service, sous les effets de la charge, la chape de l'attache porteuse suivant l'invention est l'objet, par rapport à l'aile de profilé sur laquelle elle est engagée, d'un couple de basculement, qui, indépendamment des moyens élastiquement déformables d'ancrage qui lui sont associés, la conduit à se bloquer d'elle-même sur cette aile de profilé, au bénéfice de la sûreté de son maintien sur celle-ci, et qui, ainsi, soustrait, en toute certitude, s'il en était besoin, des effets de cette charge, ces moyens élastiquement déformables d'ancrage.

Ces moyens élastiquement déformables d'ancrage n'ayant plus à charge que d'assurer la seule retenue mécanique de la chape par rapport à l'aile de profilé sur laquelle elle est engagée, leur réalisation peut avantageusement être simplifiée, au bénéfice encore du prix de revient de l'ensemble.

En bref, tout en présentant un caractère relativement universel par son aptitude à supporter des charges importantes et par sa capacité d'adaptation à toute la gamme des épaisseurs susceptibles de se présenter pour les ailes de profilé à équiper, l'attache porteuse suivant l'invention est avantageusement de réalisation particulièrement économique.

Certes, il est décrit, dans le document FR-A-2.058.674, une agrafe, qui, destinée à se fixer sur le rebord d'un panneau, présente, pour appui sur celui-ci, une languette.

Mais il s'agit en pratique d'une pince à ressort, et non pas d'une attache disposant d'un appui rigide, et la languette dont elle est dotée n'est là que pour lui offrir un appui élastique, et non pas pour constituer de quelconques moyens d'ancrage, qui, par ailleurs, ne seraient pas nécessaires, le rebord du panneau concerné suffisant à éviter un retrait intempestif de cette agrafe.

Dans le document FR-A-2.408.752, il est décrit, par ailleurs, une attache rigide, mais celle-ci intervient à la manière d'un simple serre-joint, sans présenter non plus de quelconques moyens d'ancrage.

Ces deux documents n'ont donc rien de commun avec l'objet de la présente demande.

Les caractéristiques et avantages de l'invention ressortiront d'ailleurs de la description qui va suivre, à titre d'exemple, en référence aux dessins schématiques annexés sur lesquels :

la figure 1 est une vue en perspective d'une attache porteuse suivant l'invention ;

la figure 2 en est une vue en élévation, suivant la flèche II de la figure 1 ;

la figure 3 en est une vue en coupe longitudinale, suivant la ligne III-III de la figure 1 ;

la figure 4 en est une vue en coupe transversale, suivant la ligne IV-IV de la figure 3 ;

la figure 5 est, avec au arrachement local, une vue en élévation qui, analogue à celle de la figure 2, illustre la mise en place de l'attache porteuse suivant l'invention, pour une première forme de mise en oeuvre de cette attache porteuse ;

la figure 6 est une vue en élévation analogue à celle de la figure 5, pour une deuxième forme de mise en oeuvre de l'attache porteuse suivant l'invention ;

la figure 7 est une vue en élévation qui, analogue à celle de la figure 2, se rapporte à une variante de réalisation de l'attache porteuse suivant l'invention.

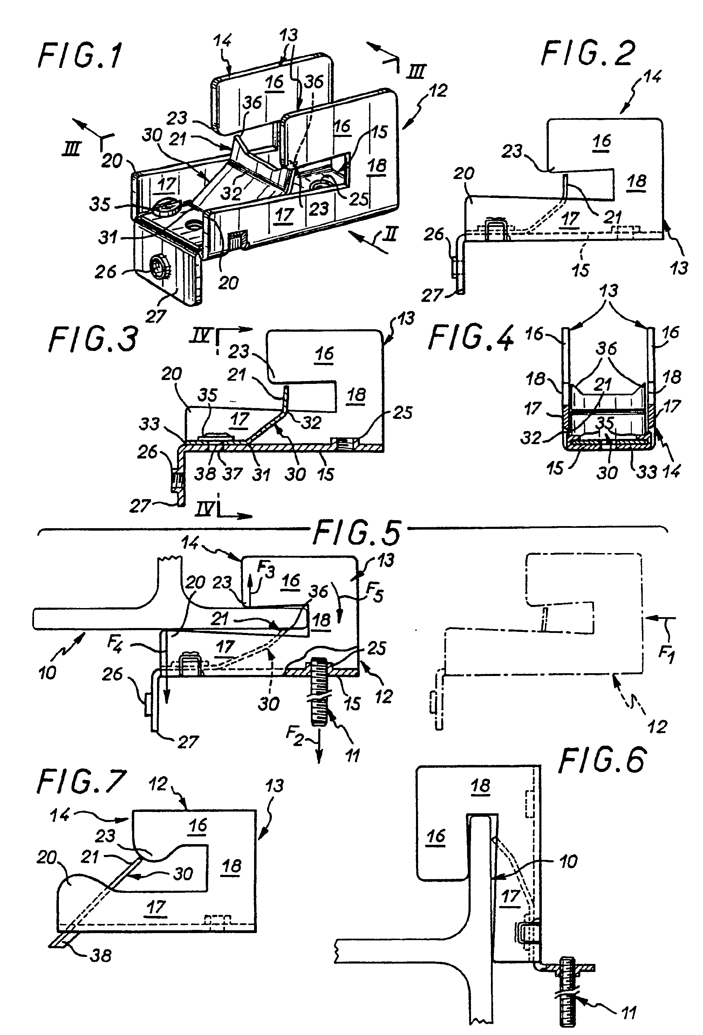

Tel qu'illustré sur ces figures, et plus particulièrement sur les figures 5 et 6, il s'agit, globalement, d'accrocher, à une quelconque aile de profilé 10, une quelconque suspente 11 propre elle-même au soutien d'un quelconque élément d'ossature, en pratique un élément d'ossature de plafond, non représenté.

Bien entendu, l'aile de profilé 10 appartient à un quelconque profilé, appartenant lui-même à une ossature formant une ossature de support pour l'ensemble.

Il s'agit, par exemple, tel que représenté, d'un profilé, qui, bien que partiellement représenté sur les figures, est un profilé en I ou en H.

Il va de soi, cependant, que tout autre type de profilé peut être concerné.

Dans la forme de réalisation représentée, la surface supérieure, ou intérieure, de l'aile de profilé 10 du profilé ainsi à équiper, est globalement parallèle à sa surface inférieure, ou extérieure.

Il va de soi, cependant, que, comme cela est la cas pour les profilés marchands, la surface supérieure, ou intérieure, d'une telle aile de profilé, pourrait présenter une certaine dépouille.

Ces dispositions étant sans incidence sur la présente invention, elles ne seront pas considérées plus longuement ici.

Il en est de même en ce qui concerne la suspente 11, qui, dans la forme de réalisation représentée, est une simple tige filetée, mais qui pourrait être d'une toute autre nature.

Pour accrocher, quelle que soit sa nature, cette suspente 11 à l'aile de profilé 10 à équiper, il est mis en oeuvre une attache 12, communément dite attache porteuse, comportant, de manière connue en soi, une chape 13 propre à son engagement sur une telle aile de profilé 10 et dotée de moyens propres à permettre d'y atteler une telle suspente 11, avec, associés à l'un au moins des bras de cette chape 13, et suivant des modalités décrites plus en détail ultérieurement, des moyens élastiquement déformables d'ancrage propres à s'opposer au retrait de cette chape 13 vis-à-vis de cette aile de profilé 10.

En fait, dans les formes de réalisation représentées, l'attache porteuse 12 suivant l'invention comporte, globalement parallèlement l'une à l'autre, à distance l'une de l'autre, deux chapes 13 identiques, et celles-ci appartiennent, conjointement, à une même pièce en U 14, dont elles forment les ailes latérales, et qui présente, à leur base, d'un seul tenant avec elles, une semelle médiane 15.

Chacune de ces chapes 13 comporte, suivant une configuration elle-même en U, deux bras, à savoir un bras 16, dit ci-après, par simple commodité, bras supérieur, parce que, destiné à intervenir du côté supérieur de l'aile de profilé 10 à équiper lorsque, comme représenté à la figure 5, le profilé correspondant est disposé dans une position pour laquelle cette aile de profilé 10 s'étend globalement horizontalement, et un bras 17, dit, lui, ci-après, pour les mêmes raisons que précédemment, bras inférieur, avec, reliant l'un à l'autre, à l'une de leurs extrémités, ce bras supérieur 16 et ce bras inférieur 17, une traverse 18.

Les bras 16 et 17 que comporte ainsi chacune des chapes 13 s'étendent globalement parallèlement à la semelle médiane 15 de la pièce en U 14 correspondante, tandis que la traverse 18 qui les relie s'étend, elle, sensiblement perpendiculairement à cette semelle médiane 15.

Dans les formes de réalisation représentées, il n'est associé de moyens élastiquement déformables d'ancrage qu'à l'un des bras 16, 17 d'une telle chape 13, et il s'agit de celui de ces bras qui est destiné à être disposé du côté extérieur par rapport à l'aile de profilé 10 à équiper.

Il s'agit donc du bras inférieur 17.

Suivant l'invention, le bras inférieur 17 de chacune des chapes 13 auxquelles sont ainsi associés des moyens élastiquement déformables d'ancrage dispose, pour son contact avec l'aile de profilé 10 concernée, d'une zone rigide d'appui 20 distincte de la zone d'action 21, décrite en détail ultérieurement, par laquelle lesdits moyens élastiquement déformables d'ancrage sont eux-mêmes adaptés à porter sur une telle aile de profilé 10.

Dans les formes de réalisation représentées, la zone rigide d'appui 20 dont dispose ainsi le bras inférieur 17 d'une chape 13 pour son contact avec une aile de profilé 10 est directement formée par l'extrémité même de ce bras inférieur 17.

Il s'agit, en pratique, dans la forme de réalisation plus particulièrement représentée sur les figures 1 à 6, de l'arête de ce bras inférieur 17 qui est à la fois à distance de la traverse 18 correspondante et de la semelle médiane 15 de le pièce en U 14 à laquelle appartient l'ensemble.

Tel que représenté, cette arête peut être plus ou moins adoucie par un congé de raccordement intervenant entre les tranches dont elle forme la frontière commune.

En pratique, suivant l'invention, les deux bras 16 et 17 de chacune des chapes 13 disposent chacun d'une telle zone rigide d'appui pour leur contact avec une aile de profilé 10, 20 pour le bras inférieur 17, et 23 pour le bras supérieur 16.

Comme précédemment, la zone rigide d'appui 23 dont dispose ainsi, lui aussi, le bras supérieur 16, est directement formée par l'extrémité même de ce bras, et, comme précédemment également, il s'agit, dans la forme de réalisation représentée sur les figures 1 à 6, de l'arête, plus ou moins adoucie, de ce bras supérieur 16 qui, éloignée de la traverse 18 correspondante, en est la plus proche de la semelle médiane 15 de la pièce en U 14 à laquelle appartient l'ensemble.

De préférence, et tel que représenté, d'un des bras 16, 17 à l'autre, les zones rigides d'appui 23, 20 correspondantes sont longitudinalement décalées l'une par rapport à l'autre.

Autrement dit, les zones rigides d'appui 23, 20 des bras 16, 17 d'une chape 13 sont disposées à des distances différentes de la traverse 18 reliant l'un à l'autre ces bras 16, 17.

En pratique, celui des bras 16, 17 auxquels sont associés des moyens élastiquement déformables d'ancrage est également celui dont la zone rigide d'appui est la plus éloignée de cette traverse 18.

Il s'agit donc, dans les formes de réalisation représentées, du bras inférieur 17.

Ainsi, compte tenu de ce que, dans la forme de réalisation plus particulièrement représentée sur les figures 1 à 6, les zones rigides d'appui 23, 20 des bras 16, 17 d'une chape 13 sont formées par l'extrémité même de ceux-ci, ces bras 16, 17 ont, par rapport à la traverse 18 qui les relie, des longueurs différentes dans cette forme de réalisation, le bras supérieur 16 étant le plus court, et le bras inférieur 17 le plus long.

En outre, dans cette forme de réalisation, le bord interne de chacun des bras 16, 17 d'une chape 13 s'étend en oblique, en se rapprochant de l'autre de ces bras 16, 17 au fur et à mesure qu'il s'éloigne de la traverse 18 qui les relie.

Autrement dit, les bords internes des bras 16, 17 de chacune des chapes 13 divergent l'un par rapport à l'autre au fur et à mesure qu'ils se rapprochent de la traverse 18 que comporte une telle chape 13.

Ainsi qu'il est aisé de le comprendre, prise dans son ensemble, chacune des chapes 13 ainsi constituées est entièrement rigide, et il en est évidemment de même de la pièce en U 14 dont ces chapes 13 forment les ailes latérales.

Dans les formes de réalisation représentées, les moyens propres à permettre d'atteler une suspente 11 à ces chapes 13 comportent un soyage taraudé 25 prévu à cet effet sur la semelle médiane 15 de la pièce en U 14 à laquelle elles appartiennent.

De manière usuelle on appelle ici soyage une collerette venue de repoussage autour d'un perçage.

De préférence, le soyage taraudé 25 s'étend à distance de l'une et de l'autre des zones rigides d'appui 23, 20 des bras 16, 17 des chapes 13.

Par exemple, et tel que représenté, il s'étend sensiblement au droit de la traverse 18 reliant l'un à l'autre de tel bras 16, 17, du côté du bord de cette traverse 18 le plus proche de ces derniers, en saillie sur le surface intérieure de la semelle médiane 15 de la pièce en U 14 correspondante, au milieu de cette semelle médiane 15.

Les moyens propres à permettre d'atteler une suspente 11 aux chapes 13 comportent, en outre, dans les formes de réalisation représentées, un deuxième soyage taraudé 26 prévu sur une languette 27 prolongeant à cet effet, en équerre, à l'une de ses extrémités, la semelle médiane 15 de la pièce en U 14 concernée.

En pratique, dans ces formes de réalisation, cette languette 27 est disposée à l'extrémité de cette semelle médiane 15 opposée à celle du côté de laquelle s'étendent les traverses 18 reliant les bras 16, 17 des chapes 13.

Ainsi qu'il est aisé de le comprendre, la pièce en U 14 ainsi constituée peut par exemple être réalisée par découpe et pliage d'un seul flan en acier ordinaire.

De préférence, et tel que représenté, les moyens élastiquement déformables d'ancrage associés aux bras inférieurs 17 des chapes 13 appartiennent à une pièce 30, qui, distincte de l'une et l'autre de ces chapes 13, est convenablement rapportée sur la pièce en U 14 à laquelle appartiennent celles-ci.

Dans les formes de réalisation représentées, cette pièce 30 est une lame élastique, qui, assujettie, à l'une de ses extrémités, à la semelle médiane 15 de cette pièce en U 14, entre les chapes 13, à l'extrémité de cette semelle médiane 15 opposée à celle du côté de laquelle s'étendent les traverses 18 de ces chapes 13, s'écarte ensuite de cette semelle médiane 15 en direction de ces traverses 18, et dont, au repos, la zone d'action 21, celle par laquelle elle est adaptée à agir sur une aile de profilé 10, fait au moins pour partie saillie entre les bras 16, 17 de ces chapes 13.

Dans la forme de réalisation plus particulièrement représentée sur les figures 1 à 6, la lame élastique constituant la pièce 30 présente, transversalement, parallèlement l'un à l'autre, deux plis 31, 32, l'un délimitant la partie 33 par laquelle elle est assujettie à la semelle médiane 15 de la pièce en U 14, l'autre délimitant, à sa racine, sa zone d'action 21.

En outre, dans cette forme de réalisation, cette pièce 30 s'étend sensiblement sur toute la distance séparant intérieurement l'une de l'autre les chapes 13.

La partie 33 par laquelle elle est assujettie à la semelle médiane 15 de la pièce en U 14 est simplement plaquée, et maintenue, contre cette semelle médiane 15, par deux plots de sertissage 35 venus chacun respectivement des bras inférieurs 17 des chapes 13, par emboutissage local de ceux-ci.

Ainsi qu'il est aisé de le comprendre, une première frappe, exercée parallèlement à la semelle médiane 15, transversalement par rapport à celle-ci, et suivant deux sens opposés l'un par rapport à l'autre, donne naissance à ces plots de sertissage 35, et une deuxième frappe, exercée perpendiculairement à cette semelle médiane 15, les applique ensuite énergiquement contre la partie 33, elle-même plaquée à cette semelle médiane 15, de la pièce 30 à assujettir à celle-ci.

Des perçages 36, 37 affectant en correspondance la pièce 30 et la pièce en U 14 permettent, lors de telles frappes, l'intervention d'une pige propre à assurer un positionnement convenable de cette pièce 30 par rapport à cette pièce en U 14.

Corollairement, dans la forme de réalisation représentée, la zone d'action 21 de la lame élastique constituant la pièce 30 s'étend, au repos, sensiblement perpendiculairement à la semelle médiane 15 de la pièce en U 14.

Pour son intervention sur une aile de profilé 10, elle comporte, dans la forme de réalisation représentée, disposées chacune respectivement à ses extrémités, deux pointes 36.

Enfin, dans cette forme de réalisation, cette zone d'action 21 s'étend à distance de la traverse 18 reliant les bras 16, 17 des chapes 13, à proximité, au repos, de la zone rigide d'appui 23 formant l'extrémité du bras supérieur 16 de celles-ci.

Pour la mise en place d'une attache porteuse 12 suivant l'invention sur une aile de profilé 10, il suffit, tel que schématisé en traits interrompus à la figure 5, de la présenter au droit de la tranche concernée de celle-ci, avec la concavité de ses chapes 13 tournée vers cette tranche, puis de l'engager, à force, par exemple à l'aide d'un marteau, sur cette dernière, suivant la flèche F1 de cette figure 5, jusqu'à ce que, tel que représenté en trait plein, la traverse 18 de ces chapes 13 y vienne en butée.

Au cours d'un tel engagement, la lame élastique constituant la pièce 30 est contrainte de s'effacer élastiquement.

Mais, les pointes 36 de la zone d'action 21 des moyens élastiquement déformables d'ancrage que constitue cette pièce 30 étant alors dirigées en direction de la traverse 18 des chapes 13, elles s'opposent, énergiquement, par arc'boutement, à tout retrait de l'attache porteuse 12 ainsi mise en place, en mordant alors sur la surface concernée, en l'espèce la surface inférieure, de l'aile de profilé 10 ainsi équipée.

Il suffit, ensuite, de rapporter, par vissage, dans le soyage taraudé 25, la suspente 11 à laquelle doit être attelée une charge.

Soit F2 cette charge, F3 la réaction d'appui au droit de la zone rigide d'appui 23 du bras supérieur 16 des chapes 13, et F4 la réaction d'appui au droit de la zone rigide d'appui 20 du bras inférieur 17 de celles-ci.

En service, les réactions F3 et F4 équilibrent la charge F2.

Mais, la direction de celle-ci étant disposée à l'écart de celles des réactions F3, F4, il en résulte, pour l'attache porteuse 12, et suivant la flèche F5 de la figure 5, un couple de basculement par rapport à l'aile de profilé 10, qui la conduit à se bloquer d'elle-même sur celle-ci, avec, en toute certitude, un appui positif tant sur la surface supérieure de cette aile de profilé 10, par le bras supérieur 16 de ses chapes 13, que sur la surface inférieure de cette aile de profilé 10, par le bras inférieur 17 de celles-ci.

Ainsi qu'il est aisé de le comprendre, le profil divergeant des bords internes des bras 16, 17 des chapes 13 favorise l'obtention d'une zone rigide d'appui 23, 20 bien délimitée pour ceux-ci et évite une quelconque autre interférence de ces bords internes avec l'aile de profilé 10 lors de la sollicitation de basculement en autoblocage dont est l'objet l'ensemble sous charge.

Il favorise en outre l'adaptation de l'attache porteuse 12 suivant l'invention à des épaisseurs d'aile de profilé différentes.

Si, comme indiqué à la figure 6, le profilé à équiper est disposé dans une position pour laquelle son aile de profilé 10 s'étend sensiblement verticalement, la mise en place de l'attache porteuse 12 suivant l'invention se fait suivant le même processus que précédemment, mais, pour l'attelage de la suspente 11, c'est la languette 27, alors à l'horizontale, de la semelle médiane 15 de sa pièce en U 14 qui est utilisée.

Dans la variante de réalisation représentée sur la figure 7, les bords internes des bras 16, 17 des chapes 13 s'étendent parallèlement l'un à l'autre, les zones rigides d'appui 20, 23 de ces bras 16, 17 sont formées par des bossages à profil arrondi en saillie sur ces bords internes, et la pièce 30 constituant les moyens élastiquement déformables d'ancrage associés à l'ensemble s'étend de manière sensiblement rectiligne, en oblique par rapport à la semelle médiane 15 de la pièce en U 14 correspondante, en étant assujettie, à l'une de ses extrémités, à une languette 38 venue d'un seul tenant de cette semelle médiane 15.

Mais, comme précédemment, ces zones rigides d'appui 23, 20 sont décalées longitudinalement l'une par rapport à l'autre, et, en pratique, elles sont disposées aux extrémités des bras 16, 17 correspondants, ceux-ci ayant eux-mêmes, comme précédemment, des longueurs différentes à compter de la traverse 18 qui les relie.

La mise en oeuvre de cette variante de réalisation est la même que celle décrite en référence à la forme de réalisation des figures 1 à 6.

La présente invention ne se limite d'ailleurs pas aux formes de réalisation ainsi décrites et représentées, mais englobe toute variante d'exécution et/ou de combinaison de leurs divers éléments.

**Revendications**

1. Attache porteuse pour ossature de plafond, du genre comportant, pour son engagement sur une quelconque aile de profilé (10), une chape (13) dotée de moyens propres à permettre d'y atteler une quelconque suspente (11), avec, associés à l'un au moins des bras de ladite chape, des moyens élastiquement déformables d'ancrage (30) propres à s'opposer au retrait de cette chape (13) vis-à-vis d'une telle aile de profilé (10), caractérisée en ce que, pour leur contact avec l'aile de profilé (10) concernée, les deux bras (16, 17) de la chape (13) disposent chacun respectivement d'une zone rigide d'appui (23, 20), la zone rigide d'appui (20) dont dispose le bras (17) auquel sont associés des moyens élastiquement déformables d'ancrage (30) est distincte de la zone d'action (21) par laquelle lesdits moyens élastiquement déformables d'ancrage (30) sont eux-mêmes adaptés à porter sur une telle aile de profilé (10), et, prise dans son ensemble, la chape (13) est entièrement rigide.

2. Attache porteuse suivant la revendication 1, caractérisée en ce que, d'un des bras (16, 17) à l'autre, les zones rigides d'appui (23, 20) sont longitudinalement décalées l'une par rapport à l'autre.

3. Attache porteuse suivant l'une quelconque des revendications 1, 2, caractérisée en ce que la zone rigide d'appui (23, 20) dont dispose un bras (16, 17) de la chape (13) pour son contact avec une aile de profilé (10) est directement formée par l'extrémité même de ce bras (16, 17).

4. Attache porteuse suivant la revendication 3, caractérisée en ce que le bord interne de chacun des bras (16, 17) de la chape (13) s'étend en oblique, en se rapprochant de l'autre de ces bras (16, 17) au fur et à mesure qu'il s'éloigne de la traverse (18) qui les relie.

5. Attache porteuse suivant l'une quelconque des revendications 1 à 4, caractérisée en ce que, des moyens élastiquement déformables d'ancrage (30) n'étant associés qu'à l'un des bras (16, 17) de la chape (13), il s'agit de celui (17) de ces bras qui est destiné à être disposé du côté extérieur par rapport a l'aile de profilé (10) concernée.

6. Attache porteuse suivant les revendications 2 et 5, prises conjointement, caractérisée en ce que celui (17) des bras de la chape (13) auxquels sont associés des moyens élastiquement déformables d'ancrage (30) est également celui dont la zone rigide d'appui (20) est la plus éloignée de la traverse (18) qui le relie à l'autre.

7. Attache porteuse suivant l'une quelconque des revendications 1 à 6, caractérisée en ce que les moyens élastiquement déformables d'ancrage (30) associés à un bras (17) de la chape (13) appartiennent à une pièce (30) distincte de cette chape (13).

8. Attache porteuse suivant l'une quelconque des revendications 1 à 7, caractérisée en ce qu'elle comporte, globalement parallèlement l'une à l'autre, deux chapes (13) identiques, qui, conjointement, appartiennent à une même pièce en U (14) dont elles forment les ailes latérales.

9. Attache porteuse suivant les revendications 7 et 8, prises conjointement, caractérisée en ce que la pièce (30) à laquelle appartiennent les moyens élastiquement déformables d'ancrage (30) mis en oeuvre est une lame élastique, qui, assujettie, à l'une de ses extrémités, à la semelle médiane (15) de la pièce en U (14) à laquelle appartiennent les chapes (13), entre celles-ci, s'écarte ensuite de cette semelle médiane (15) en direction des traverses (18) de ces chapes (13), et dont, au repos, la zone d'action (21), celle par laquelle elle est adaptée à agir sur une aile de profilé (10), fait au moins pour partie saillie entre les bras (16, 17) desdites chapes (13).

10. Attache porteuse suivant la revendication 9, caractérisée en ce que, au repos, la zone d'action (21) de ladite lame élastique s'étend sensiblement perpendiculairement à la semelle médiane (15) de ladite pièce en U (14).

11. Attache porteuse suivant l'une quelconque des revendications 9, 10, caractérisée en ce que ladite lame élastique présente, transversalement, parallèlement l'un à l'autre, deux plis (31, 32), l'un délimitant la partie (33) par laquelle elle est assujettie à la semelle médiane (15) de ladite pièce en U (14), l'autre délimitant, à sa racine, sa zone d'action (21).

12. Attache porteuse suivant l'une quelconque des revendications 8 à 11, caractérisée en ce que les moyens propres à permettre d'atteler une suspente (11) comportent un soyage taraudé (25) prévu à cet effet sur la semelle médiane (15) de la pièce en U (14) à laquelle appartiennent les chapes (13).

13. Attache porteuse suivant la revendication 12, caractérisée en ce que ledit soyage taraudé (25) s'étend à l'écart des zones rigides d'appui (23, 20) des bras (16, 17) des chapes (13).

14. Attache porteuse suivant l'une quelconque des revendications 12, 13, caractérisée en ce qu'un deuxième soyage taraudé (26) est prévu sur une languette prolongeant, en équerre, à l'une de ses extrémités, la semelle médiane (15) de la pièce en U (14) à laquelle appartiennent les chapes (13).

## Patentansprüche

1. Tragende Klammer für Deckengerüst, die für ihr Aufstecken auf einen beliebigen Profilschenkel (10) eine Gabel (13) besitzt, die mit Einrichtungen ausgerüstet ist, die es gestatten, daran eine beliebige Aufhängung (11) anzukuppeln, mit mindestens einem der Arme der Gabel zugeordneten, elastisch verformbaren Verankerungseinrichtungen (30), die sich dem Ablösen der Gabel (13) von dem Profilschenkel (10) widersetzen, dadurch gekennzeichnet, daß die beiden Arme (16, 17) der Gabel (13) für ihren Kontakt mit dem betreffenden Profilschenkel (10) jeweils über eine starre Auflagezone (23, 20) verfügen, wobei die starre Auflagezone (20), über die der Arm (17) verfügt, dem elastisch verformbare Verankerungseinrichtungen (30) zugeordnet sind, von der Wirkzone (21) verschieden ist, mit der die elastisch verformbaren Verankerungseinrichtungen (30) an einem solchen Profilschenkel (10) anliegen können, und daß die Gabel (13) als ganzes vollständig starr ist.

2. Tragende Klammer nach Anspruch 1, dadurch gekennzeichnet, daß die starren Auflagezonen (23, 20) von einem der Arme (16, 17) zum anderen in Längsrichtung gegeneinander versetzt sind.

3. Tragende Klammer nach einem der Ansprüche 1, 2, dadurch gekennzeichnet, daß die starre Auflagezone (23, 20), über die ein Arm (16, 17) der Gabel (13) für seinen Kontakt mit dem Profilschenkel (10) verfügt, direkt von dem Ende dieses Arms (16, 17) selbst geformt ist.

4. Tragende Klammer nach Anspruch 3, dadurch gekennzeichnet, daß der innere Rand jedes Arms (16, 17) der Gabel (13) sich schräg erstreckt, indem er sich dem anderen Arm (16, 17) in dem Maße nähert, wie er sich von dem sie verbindenden Steg (18) entfernt.

5. Tragende Klammer nach einem der Ansprüche 1 bis 4, dadurch gekennzeichnet, daß, wenn elastisch verformbare Verankerungseinrichtungen (30) nur einem der Arme (16, 17) der Gabel (13) zugeordnet sind, es sich um denjenigen (17) dieser Arme handelt, der dazu bestimmt ist, bezüglich des betreffenden Profilschenkels (10) auf der Außenseite angeordnet zu sein.

6. Tragende Klammer nach den Ansprüchen 2 und 5 zusammen, dadurch gekennzeichnet, daß derjenige (17) der Arme der Gabel (13), denen elastisch verformbare Verankerungseinrichtungen (30) zugeordnet sind, gleich demjenigen ist, dessen starre Auflagezone (20) am weitesten von dem Steg (18) entfernt ist, der ihn mit dem anderen verbindet.

7. Tragende Klammer nach einem der Ansprüche 1 bis 6, dadurch gekennzeichnet, daß die einem Arm (17) der Gabel (13) zugeordneten elastisch verformbaren Verankerungseinrichtungen (30) zu einem von dieser Gabel (13) getrennten Teil (30) gehören.

8. Tragende Klammer nach einem der Ansprüche 1 bis 7, dadurch gekennzeichnet, daß sie im wesentlichen parallel zueinander zwei gleiche Gabeln (13) besitzt, die gemeinsam zu ein und demselben U-förmigen Teil (14) gehören, dessen seitliche Schenkel sie bilden.

9. Tragende Klammer nach den Ansprüchen 7 und 8 zusammen, dadurch gekennzeichnet, daß das Teil (30), zu dem die benutzten elastisch verformbaren Verankerungseinrichtungen (30) gehören, eine elastische Lamelle ist, die an einem ihrer Enden an der mittleren Bodenplatte (15) des U-förmigen Teils (14), zu dem die Gabeln (13) gehören, und zwischen diesen befestigt ist und sich anschließend von dieser Bodenplatte (15) in Richtung auf die Stege (18) dieser Gabeln (13) erstreckt und deren Wirkzone (21), mit der sie auf einen Profilschenkel (10) einwirken kann, im Ruhezustand zumindest zum Teil zwischen den Armen (16,17) der Gabeln (13) hervorsteht.

10. Tragende Klammer nach Anspruch 9, dadurch gekennzeichnet, daß sich die Wirkzone (21) der elastischen Lamelle im Ruhezustand im wesentlichen senkrecht zur mittleren Bodenplatte (15) des U-förmigen Teils (14) erstreckt.

11. Tragende Klammer nach einem der Ansprüche 9, 10, dadurch gekennzeichnet, daß die elastische Lamelle in Querrichtung, parallel zueinander zwei Knicke (31, 32) besitzt, deren einer den Teil (33) abgrenzt, mit dem sie an der mittleren Bodenplatte (15) des U-förmigen Teils (14) befestigt ist, und deren anderer an seiner Wurzel ihre Wirkzone (21) abgrenzt.

12. Tragende Klammer nach einem der Ansprüche 8 bis 11, dadurch gekennzeichnet, daß die Einrichtungen, die die Ankupplung einer Aufhängung (11) gestatten, ein durchgezogenes Gewindeloch (25) besitzen, das zu diesem Zweck an der mittleren Bodenplatte (15) des U-förmigen Teils (14) vorgesehen ist, zu dem die Gabeln (13) gehören.

13. Tragende Klammer nach Anspruch 12, dadurch gekennzeichnet, daß sich das durchgezogene Gewindeloch (25) in einem Abstand von den starren Auflagezonen (23, 20) der Arme (16, 17) der Gabeln (13) erstreckt.

14. Tragende Klammer nach einem der Ansprüche 12, 13, dadurch gekennzeichnet, daß ein zweites durchgezogenes Gewindeloch (26) an einem Lappen vorgesehen ist, der im rechten Winkel an einem ihrer Enden die mittlere Bodenplatte (15) des U-förmigen Teils (14) verlängert, zu dem die Gabeln (13) gehören.

## Claims

1. A support attachment for a ceiling framework of the type comprising, for engagement thereof on any profile member limb (10), a forked plate portion (13) provided with means for permitting any hanger member (11) to be coupled thereto, with, associated with one at least of the arms of said forked plate portion, resiliently deformable anchoring means (30) for resisting withdrawal of said forked plate portion (13) with respect to such a profile member limb (10), characterised in that, for their contact with the profile member limb (10) in question, the two arms (16, 17) of the forked plate portion (13) each have a respective rigid support zone (23, 20), the rigid support zone (20) with which the arm (17) with which resiliently deformable anchoring means (30) are associated is provided is separate from the operative zone (21) by means of which said resiliently deformable anchoring means (30) are themselves adapted to bear on such a profile member limb (10) and, taken generally, the forked plate portion (13) is entirely rigid.

2. A support attachment according to claim 1 characterised in that, from one of the arms (16, 17) to the other, the rigid support zones (23, 20) are longitudinally displaced relative to each other.

3. A support attachment according to either one of claims 1 and 2 characterised in that the rigid support zone (23, 20) with which one arm (16, 17) of the forked plate portion (13) is provided for contact thereof with a profile member limb (10) is directly formed by the actual end of said arm (16, 17).

4. A support attachment according to claim 3 characterised in that the inside edge of each of the arms (16, 17) of the forked plate portion (13) extends inclinedly, moving towards the other of said arms (16, 17) in proportion to its increasing distance from the transverse portion (18) which connects them.

5. A support attachment according to any one of claims 1 to 4 characterised in that, resiliently deformable anchoring means (30) being associated only with one of the arms (16, 17) of the forked plate portion (13), it is that one of said arms (17) which is intended to be disposed on the outward side with respect to the profile member limb (10) in question.

6. A support attachment according to claims 2 and 5 in combination characterised in that that one (17) of the arms of the forked plate portion (13) with which resiliently deformable anchoring means (30) are associated is also that whose rigid support zone (20) is more remote from the transverse portion (18) which connects it to the other.

7. A support attachment according to any one of claims 1 to 6 characterised in that the resiliently deformable anchoring means (30) associated with an arm (17) of the forked plate portion (13) belong to a part (30) which is separate from said forked plate portion (13).

8. A support attachment according to any one of claims 1 to 7 characterised in that it comprises, generally parallel to each other, two identical forked plate portions (13) which jointly belong to the same U-shaped part (14) of which they form the side limbs.

9. A support attachment according to claims 7 and 8 in combination characterised in that the part (30) to which the resiliently deformable anchoring means (30) used belong is a resilient blade which, fixed at one of its ends to the central base portion (15) of the U-shaped part (14) to which the forked plate portions (13) belong, between same, then extends away from said central base portion (15) towards the transverse portions (18) of said forked plate portions (13), the blade having an operative zone (21), being that by means of which it is adapted to act on a profile member limb (10), which in the rest condition projects at least partly beetween the arms (16, 17) of said forked plate portions (13).

10. A support attachment according to claim 9 characterised in that in the rest condition the operative zone (21) of said resilient blade extends substantially perpendicularly to the central base portion (15) of said U-shaped part (14).

11. A support attachment according to either one of claims 9 and 10 characterised in that said resilient blade comprises, transversely, and in mutually parallel relationship, two bends (31, 32), one delimiting the part (33) by means of which it is connected to the central base portion (15) of said U-shaped part (14) and the other delimiting its operative zone (21) at the root thereof.

12. A support attachment according to any one of claims 8 to 11 characterised in that the means permitting a hanger member (11) to be coupled thereto comprise a tapped boss (25) provided for that purpose on the central base portion (15) of the U-shaped part (14) to which the forked plate portions (13) belong.

13. A support attachment according to claim 12 characterised in that said tapped boss (25) extends at a spacing from the rigid support zones (23, 20) of the arms (16, 17) of the forked plate portions (13).

14. A support attachment according to either one of claims 12 and 13 characterised in that a second tapped boss (26) is provided on a tongue portion which prolongs in right-angled relationship at one of its ends the central base portion (15) of the U-shaped part (14) to which the forked plate portions (13) belong.

FIG.1

FIG.2

FIG.3

FIG.4

FIG.5

FIG.6

FIG.7